Europäisches Patentamt

European Patent Office

Office européen des brevets

(11) Veröffentlichungsnummer: **0 241 741**
**B1**

(12) **EUROPÄISCHE PATENTSCHRIFT**

(45) Veröffentlichungstag der Patentschrift:
02.05.90

(21) Anmeldenummer: 87103950.9

(22) Anmeldetag: 18.03.87

(51) Int. Cl.⁴: **F16J 3/04,** F16C 11/06

(54) **Dichtungsbalg für Kugelgelenke.**

(30) Priorität: 17.04.86 DE 3612913

(43) Veröffentlichungstag der Anmeldung:
21.10.87 Patentblatt 87/43

(45) Bekanntmachung des Hinweises auf die Patenterteilung:
02.05.90 Patentblatt 90/18

(84) Benannte Vertragsstaaten:
DE ES FR GB IT

(56) Entgegenhaltungen:
DE-A- 2 945 234
DE-A- 2 946 604

(73) Patentinhaber: TRW Ehrenreich GmbH & Co. KG,
Hansa-Allee 190, D-4000 Düsseldorf 11(DE)

(72) Erfinder: Barbet, Karl-Heinz, Novalisstr. 4,,
D-4052 Korschenbroich 1(DE)
Erfinder: Schuett, Hans Joachim, Annastrasse 26,,
D-5100 Aachen(DE)
Erfinder: Mette, Ulrich, Burgstrasse 9,,
D-4300 Essen 17(DE)
Erfinder: Klier, Benno, Weber Strasse 2,,
D-4005 Meerbusch(DE)
Erfinder: Busse Fritz, Ludwig-Richter-Strasse 29,
D-4010 Hilden(DE)
Erfinder: Blumberg, Willy, Am Eisenbrand 20,,
D-4005 Meerbusch(DE)

(74) Vertreter: Patentanwälte Dipl.-Ing. Alex Stenger
Dipl.-Ing. Wolfram Watzke Dipl.-Ing. Heinz J. Ring,
Kaiser-Friedrich-Ring 70, D-4000 Düsseldorf 11(DE)

## Beschreibung

Gegenstand der Erfindung ist ein Dichtungsbeleg für Kugelgelenke, der die Öffnung zwischen einem Gelenkgehäuse und einem winkel- bzw. drehbeweglich aus diesem herausragenden Kugelzapfen verschließt, wobei der Dichtungsbalg aus einem Elastomer mit einer großen Öffnung auf dem Gelenkgehäuse befestigt ist und mit einer kleinen Öffnung dichtend am Kugelzapfen anliegt, wobei der Dichtungsbalg fortlaufend ineinandergefaltete, axial zum Kugelzapfen ausgerichtete sich in Axialrichtung zumindest teilweise überdeckende Schlauchabschnitte hat, die untereinander durch umlaufende Falten verbunden sind und wobei die Schlauchabschnitte ausgehend von dem am Gelenkgehäuse befestigten, nicht eingefalteten Schlauchabschnitt fortlaufend einen geringeren Durchmesser aufweisen.

Aus der US-A 2 264 728 ist ein Dichtungsbalg für ein Universalgelenk oder dgl. bekannt, der im wesentlichen schlauchförmig ausgebildet ist und mit beiden Öffnungen an zueinander winkelbeweglichen Gelenkpartnern festgelegt ist. Der Dichtungsbalg weist radial ausgerichtete Schaluchabschnitte auf, die untereinander durch radial nach innen und radial nach außen gerichtete Falten verbunden sind. Die Falten können Verdickungen aufweisen.

Der vorbekannte Dichtungsbalg hat den Nachteil, daß er aufgrund seiner radial ausgerichteten Falten ein großes Bauvolumen aufweist. Dieses Bauvolumen vergrößert sich in radialer Richtung noch beträchtlich, wenn der Dichtungsbalg bei einer Winkelstellung der Gelenkpartner verformt wird. Dabei bewirken die Verdickungen an den Falten, daß sich der Dichtungsbalg an diesen Stellen nach außen biegt, um nicht die Gelenkverbindung zu berühren. Dabei sind die Schlauchabschnitte nur unzureichend vor mechanischer Beschädigung geschützt. Auf der Außenseite der Gelenkverbindung wird der Dichtungsbalg nämlich erheblich auseinandergespreizt, so daß die Schlauchabschnitte praktisch offenliegen.

Aus der DE-B 1 286 823 ist ein Dichtungsbalg für Kugelgelenke in Form eine Stulps aus einem Elastomer bekannt, der mit einer Öffnung auf dem Gelenkgehäuse befestigt ist und an einer weiteren Öffnung an einem den Kugelzapfen umschließenden Dichtring anliegt. Der vorbekannte Dichtungsbalg weist ineinandergefaltete Schlauchabschnitte auf, die untereinander durch umlaufende Falten verbunden sind, wobei der kugelzapfenseitig anliegende Schlauchabschnitt radial außen angeordnet ist und die übrigen Schlauchabschnitte fortlaufend in diesen hineingefaltet sind. Diese Aufeinanderfolge ineinandergefalteter Schlauchabschnitte bedingt ein nachteiliges, großes Bauvolumen des Dichtungsbalges, der an den Falten des radial außenliegenden Schlauchabschnittes einen erheblich größeren Außendurchmesser als das Gelenkgehäuse aufweist, um den hineingefalteten Schlauchabschnitten einen genügenden Bewegungsspielraum zur Verfügung zu stellen.

Aus der US-A 3 650 552 ist ein Kugelgelenk mit einem elastischen Dichtungsbalg bekannt, der drei zylindrische Schlauchabschnitte hat, wobei ein äußerer Schlauchabschnitt über eine nach außen gewölbte Falte mit einem ersten hineingefalteten Schlauchabschnitt verbunden ist, welcher seinerseits über eine nach innen gewölbte Falte mit einem zweiten hineingefalteten Schlauchabschnitt verbunden ist. Der vorbekannte Dichtungsbalg ist vor mechanischer Beschädigung nicht geschützt, so daß er beispielsweise in Lenkgestängen von Kraftfahrzeugen durch aufgewirbelte Festkörper verletzt werden kann. Darüber hinaus ist seine Formbeständigkeit nicht besonders groß, da sich seine Falten und Schlauchabschnitte bei einer Dreh- bzw. Winkelbewegung verschieben können und der Aufbau einer Rückstellkraft zudem durch ein frühes Einknicken der Falten verhindert wird. Infolgedessen ist der vorbekannte Dichtungsbalg an seiner kugelzapfenseitigen Öffnung beidseitig in einer Nut geführt, so daß er annähernd seine Ausgangsform zurückgewinnt, wenn der Kugelzapfen seine Mittellage einnimmt. Schließlich ist der Platzbedarf des Dichtungsbalges groß, insbesondere weil der außen anliegende Schlauchabschnitt großen Verformungen unterliegt.

Aus der EP-B 0 157 559 ist ein Dichtungsbalg für Gelenkverbindungen bekannt, dessen schlauchförmiger Körper aus flexiblem Material an seinen endseitigen Öffnungen an den Gelenkpartnern festgelegt ist, wobei mindestens ein Schlauchabschnitt in einen angrenzenden Schlauchabschnitt hineingefaltet ist. Dieser Dichtungsbalg weist im wesentlichen die Nachteile des vorbeschriebenen Dichtungsbalges für Kugelgelenke auf.

Davon ausgehend liegt der Erfindung die Aufgabe zugrunde, einen Dichtungsbalg zu schaffen, der unter Beibehaltung einer relativ einfachen Herstellbarkeit und günstiger Selbstreiningungseigenschaften der Spalte zwischen den Schlauchabschnitten besser gegen mechanische Beschädigung geschützt ist, formbeständiger ist, dennoch eine ausreichende Weichheit und einen großen Ausschlagbereich aufweist und auch bei großen Ausschlagwinkeln des Kugelzapfens einen nur geringen Platzbedarf hat.

Zur technischen Lösung dieser Aufgabe ist bei einer ersten Lösungsvariante vorgesehen, daß der Dichtungsbalg nur eine axial zum Kugelzapfen nach außen gerichtete Falte aufweist, die spiralförmig um die Zapfenachse gewunden ist und daß die axial zum Kugelzapfen nach außen gerichtete Falte eine Materialanhäufung aufweist, die im Vergleich zu den Schlauchabschnitten und der axial zum Kugelzapfen nach innen gerichteten Falte eine Vergrößerung der Wandstärke bewirkt.

Bei einem nach dieser technischen Lehre ausgebildeten Dichtungsbalg verläuft also die axial zum Kugelzapfen nach außen gerichtete und spiralförmig um die Zapfenachse gewundene Falte zwischen den Öffnungen des Dichtungsbalges für das Gelenkgehäuse und den Kugelzapfen. Dabei verbindet die spiralförmige Falte zwei ebenfalls spiralförmig ausgebildete Schlauchabschnitte, von denen der eine radial außen an der spiralförmigen Falte und der andere radial innen an der spiralförmigen Falte angeordnet ist. Die beiden spiralförmigen Schlauchabschnitte sind an ihren beiden axial zum Kugelzapfen nach innen gerichteten Enden mit einer weiteren Falte verbunden, die zwangsläufig ebenfalls spiralförmig um die Zapfenachse gewunden ist.

Ein erfindungsgemäß ausgebildeter Dichtungsbalg hat den Vorteil, daß die Materialhäufung der axial nach außen gerichteten Falte den Dichtungsbalg vor Beschädigungen durch aufprallende Festkörper schützt und die Formbeständigkeit des Dichtungsbalges erhöht, weil sich in ihm beim Auslenken des Kugelzapfens eine erhöhte elastische Spannung und somit eine erhöhte Rückstellkraft aufbaut. Dabei verleihen die Schlauchabschnitte und die axial nach innen gerichtete Falte dem Dichtungsbalg eine ausreichende Weichheit und Elastizität, so daß große Ausschlag- und Drehwinkel des Kugelzapfens möglich sind und der Dichtungsbalg immer seine Ausgangsform zurückgewinnt. Schließlich bewirkt die geringe Verformbarkeit der axialen nach außen gerichteten Falte, daß der Dichtungsbalg auch bei großen Ausschlagbewegungen des Kugelzapfens bicht bereichsweise einknickt und einen nur geringen Platzbedarf über den maximalen Durchmesser des Gelenkgehäuses hinaus hat. Somit löst der erfindungsgemäße Dichtungsbalg die zugrundeliegende Aufgae.

Die Materialanhäufung kann auch von einer Klemmleiste gebildet werden, die außen auf die Falte aufgesetzt wird. Bei einer bevorzugten Ausführungsform ist die Materialanhäufung einteilig mit der axial nach außen gerichteten Falte verbunden und füllt die Spirale zwischen den Schlauchabschnitten teilweise aus, so daß die Materialanhäufung gemeinsame mit dem Dichtungsbalg erzeugt werden kann.

Bei einer weiteren Ausführungsform hat der radial außen angeordnete Schlauchabschnitt eine größere Wandstärke als die hineingefalteten Schlauchabschnitte, so daß dieser einerseits vor einer Beschädigung geschützt ist und andererseits praktisch keiner seitlichen Auslenkung unterliegt. Dabei wird der Platzbedarf des Dichtungsbalges zusätzlich gemindert, weil sich die hineingefalteten Schlauchabschnitte an dem radial außen angeordneten Schlauchabschnitt abstützen können.

Bei einer weiteren Ausführungsform ist die axial nach außen gerichtete Falte mit kleinerem Durchmesser axial zum Kugelzapfen weiter außen angeordnet. Hierdurch wird erreicht, daß die Außenoberfläche des erfindungsgemäßen Dichtungsbalges im wesentlichen von der axial nach außen gerichteten Falte abgedeckt wird, welche aufprallenden Festkörpern einen besonders hohen Widerstand entgegengesetzt. Darüber hinaus behindert die axial nach außen gerichtete Falte den Ausschlag des Kugelzapfens praktisch nicht und kann der hineingefaltete Schlauchabschnitt so bemessen werden, daß er eine ausreichende Weichheit hat.

Bei einer zweiten Lösungsvariante ist vorgesehen, daß jede axial zum Kugelzapfen nach außen gerichtete Falte eine einteilig verbundene Materialanhäufung aufweist, die im Vergleich zu den Schlauchabschnitten und den axial zum Kugelzapfen nach innen gerichteten Falten eine Vergrößerung der Wandstärke bewirkt, daß die Materialanhäufungen ausschließlich die Spalte zwischen den Schlauchabschnitten teilweise ausfüllen, daß die axial zum Kugelzapfen nach außen gerichteten Falten entlang der Zapfenachse gestaffelt angeordnet sind, wobei sich die Falten mit kleinerem Durchmesser axial zum Kugelzapfen weiter außen befinden und daß die Materialanhäufungen die Spalte so ausfüllen, daß sie gemeinsam die hineingefalteten Schlauchabschnitte radial zum Kugelzapfen vollständig abdecken und vor einer Beschädigung schützen.

Bei einem nach dieser technischen Lehre ausgebildeten Dichtungsbalg füllen die Materialanhäufungen an den nach außen gerichteten, gestaffelten Falten die Spalte zwischen den Schlauchabschnitten so aus, daß sie gemeinsam die hineingefalteten Schlauchabschnitte radial zum Kugelzapfen vollständig abdecken.

Der Dichtungsbalg hat somit den Vorteil, daß die verstärkten Falten sämtliche Schlauchabschnitte und unverstärkten Falten vor auftreffenden Festkörpern schützen. Die Formbeständigkeit des Dichtungsbalges wird durch die verstärkten Falten erhöht, die für eine vergrößerte Balgspannung bei einer Balgverformung sorgen. Dabei verleihen die Schlauchabschnitte und axial nach innen gerichteten Falten dem Dichtungsbalg eine ausreichende Weichheit und Elastizität. Durch die Materialanhäufungen an den nach außen gerichteten Falten wird jedoch ein bereichsweises Einknicken an den äußeren Falten verhindert, so daß diese, ohnehin einer erhöhten Beanspruchung unterliegenden Balgteile vor einer Überbeanspruchung geschützt werden. Schließlich hat der Dichtungsbalg aufgrund der geringen Verformbarkeit der axial nach außen gerichteten Falten auch bei großen Ausschlagbewegungen des Kugelzapfens einen nur geringen Platzbedarf.

Bei einer weiteren Ausführungsform hat jede axial nach außen gerichtete Falte außen eine Rundung, so daß Festkörper mit verschiedenen Aufschlagwinkeln zurückgeschleudert werden.

Eine weitere Steigerung der Drehweichheit wird erzielt, wenn die Schlauchabschnitte in Umfangsrichtung und/oder in Zapfenachsrichtung sinusförmig gewellt sind.

Weitere Einzelheiten und Vorteile des Gegenstandes der Erfinung ergeben sich aus der nachfolgenden Beschreibung der zugehörigen Zeichnungen, in denen bevorzugte Ausführungsformen eines erfindungsgemäßen Dichtungsbalges dargestellt worden sind. In den Zeichnungen zeigen:

Fig. 1 einen erfindungsgemäßen Dichtungsbalg an einem zugehörigen Kugelgelenk in der Ansicht und teilweise geschnitten;

Fig. 2 denselben Dichtungsbalg an demselben Kugelgelenk in verkleinertem Maßstab und in perspektivischer Darstellung;

Fig. 3 den Dichtungsbalg aus Fig. 1 im Schnitt;

Fig. 4 eine Hälfte eines Dichtungsbalges mit verlängerten Schlauchabschnitten im Schnitt;

Fig. 5 eine Hälfte eines Dichtungsbalges mit vergrößerten Materialanhäufungen im Schnitt;

Fig. 6 einen Dichtungsbalg mit spiralförmiger Falte im Schnitt.

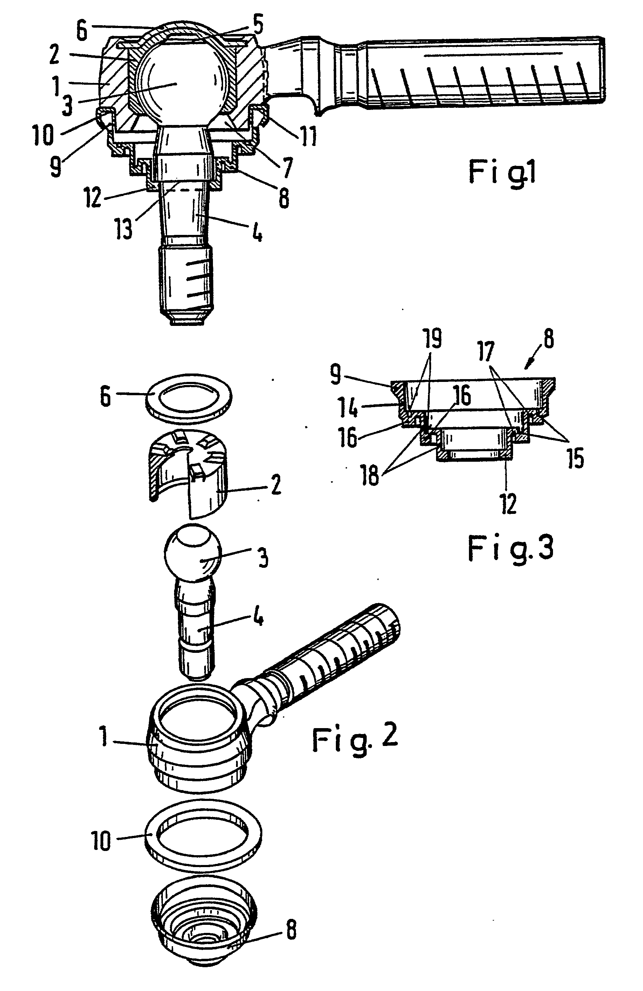

Die Fig. 1 und 2 zeigen ein Kugelgelenk mit einem Gelenkgehäuse 1, in das eine Lagerschale 2 eingesetzt ist, in der der Kugelkopf 3 eines dreh- bzw. winkelbeweglichen Kugelzapfens 4 gelagert ist. Nahe der Polkappe des Kugelkopfes 3 hat die Lagerschale 2 ein Fettreservoir 5. Die Lagerschale 2 wird von einem eingewalzten Gehäusedeckel 6 im Gelenkgehäuse 1 gehalten.

Das Gelenkgehäuse 1 hat eine Ausschlagöffnung 7 für den Kugelzapfen 4, die mit einem Dichtungsbalg 8 verschlossen ist, um den Eintritt von Verunreinigungen in das Innere des Kugelgelenkes und den Austritt der Fettfüllung zu verhindern. Der Dichtungsbalg 8 hat gelenkgehäuseseitig einen Balgwulst 9, welcher von einem Haltering 10 in einer außen umlaufenden Ringstufe 11 des Gelenkgehäuses 1 gehalten wird. Zapfenseitig ist der Dichtungsbalg 8 mit einem Dichtring 12 versehen, der dichtend am Kugelzapfen 4 anliegt und innen an einem Absatz 13 abgestützt ist. Der Kugelzapfen 4 ist in dem Dichtring 12 verdrehbar.

Der erfindungsgemäße Dichtungsbalg 8 ist einfach montierbar, da insbesondere keine Befestigungsmittel am Kugelzapfen 4 erforderlich sind. Es können dort aber Befestigungsmittel vorgesehen werden, insbesondere um die Abdichtung zu verbessern, weil der Dichtungsbalg auch eine ausreichende Torsionselastizität aufweist.

Einzelheiten des erfindungsgemäßen Dichtungsbalges 8 können besser der Fig. 3 entnommen werden. An den gelenkgehäuseseitigen Balgwulst 9 schließt sich ein Schlauchabschnitt 14 an. In diesen, radial außen angeordneten Schlauchabschnitt 14 sind weitere Schlauchabschnitte hineingefaltet, wobei ein erster hineingefalteter Schlauchabschnitt 15 über eine axial nach außen gerichtete Falte 16 mit dem außen angeordneten Schlauchabschnitt 14 verbunden ist. An den hineingefalteten Schlauchabschnitt 15 schließt sich eine radial nach innen gerichtete Falte 17 an, an die sich ein weiterer hineingefalteter Schlauchabschnitt 18 anschließt. Daran schließen sich weitere Falten und Schlauchabschnitte entsprechend den mit den Bezugsziffern 15 bis 18 gekennzeichneten an, bis schließlich der Dichtring 12 anstatt einer axial nach außen gerichteten Falte angeordnet ist.

An den axial nach außen gerichteten Falten 16 hat der Dichtungsbalg 8 Materialanhäufungen, welche die Spalte 19 zwischen den Schlauchabschnitten teilweise ausfüllen. Der radial außen angeordnete Schlauchabschnitt 14 weist gegenüber den hineingefalteten Schlauchabschnitten 15,18 eine größere Wandstärke auf. Durch Staffelung der axial nach außen gerichteten Falten 16 in Zapfenachsrichtung, wobei die Falten mit dem jeweils kleineren Durchmesser axial weiter außen angeordnet sind, ist der Dichtungsbalg weich und beweglich.

Bei den nachfolgend beschriebenen Dichtungsbälgen sind Bestandteile, die den zuvor beschriebenen funktionsverwandt sind, entsprechend beziffert. Durch Bemessungen der hineingefalteten Schlauchabschnitte 15,18 und deren Anzahl können die Weichheit und Formbeständigkeit des Dichtungsbalges und der maximal mögliche Auschlagwinkel des Kugelzapfens beeinflußt werden.

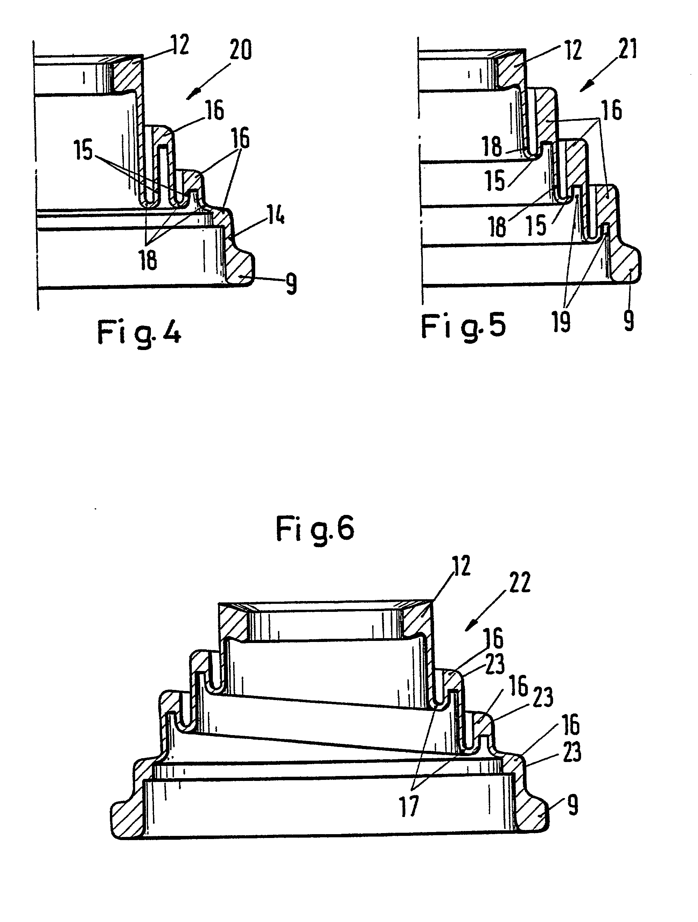

Die Fig. 4 zeigt einen Dichtungsbalg 20, mit gestaffelten, axial nach außen gerichteten Falten 16, bei dem die Länge der hineingefalteten Schlauchabschnitte 15,18 mit kleiner werdendem Durchmesser zunimmt, so daß das Innenvolumen des Dichtungsbalges 8 optimal ausgenutzt wird.

Die Fig. 5 zeigt einen Dichtungsbalg 21, bei dem die Masseanhäufungen an den gestaffelten Falten 16 die Spalte 19 so ausfüllen, daß die Masseanhäufungen die hineingefalteten Schlauchabschnitte 15,18 seitlich vollständig abdecken und vor einer Beschädigung schützen.

Die Fig. 6 zeigt einen Dichtungsbalg 22, bei dem die axial nach außen gerichtete Falte 16 spiralförmig um die Zapfenachse gewunden ist, wobei die Falte 16 mit kleiner werdendem Durchmesser axial weiter außen angeordnet ist. Die axial nach innen gerichtete Falte 17 ist entsprechend spiralförmig um die Zapfenachse gewunden. Die Falten 16 haben außen eine Rundung 23.

Die Dichtungsbälge können aus einem Elastomer hergestellt werden, beispielsweise aus Polyurethan (PUR).

## Patentansprüche

1. Dichtungsbalg (8) für Kugelgelenke, der die Öffnung (7) zwischen einem Gelenkgehäuse (1) und einem Winkel- bzw. drehbeweglich aus diesem herausragenden Kugelzapfen (4) verschließt, wobei der Dichtungsbalg (8) aus einem Elastomer mit einer großen Öffnung auf dem Gelenkgehäuse (1) befestigt ist und mit einer kleinen Öffnung dichtend am Kugelzapfen (4) anliegt, wobei der Dichtungsbalg (8) fortlaufend ineinandergefaltete, axial zum Kugelzapfen (4) ausgerichtete sich in Axialrichtung zumindest teilweise überdeckende Schlauchabschnitte (14, 15, 18) hat, die untereinander durch umlaufende Falten (16, 17) verbunden sind und wobei die Schlauchabschnitte (14, 15, 18) ausgehend von dem am Gelenkgehäuse (1) befestigten, nicht eingefalteten Schlauchabschnitt (14) fortlaufend einen geringeren Durchmesser aufweisen, dadurch gekennzeichnet, daß der Dichtungsbalg (8) nur eine axial zum Kugelzapfen (4) nach außen gerichtete Falte (16) aufweist, die spiralförmig um die Zapfenachse gewunden ist und daß die axial zum Kugelzapfen (4) nach außen gerichtete Falte (16) eine Materialanhäufung aufweist, die im Vergleich zu den Schlauchabschnitten (14, 15, 18) und der axial zum Kugelzapfen (4) nach innen gerichteten Falte (17) eine Vergrößerung der Wandstärke bewirkt.

2. Dichtungsbalg nach Anspruch 1, dadurch gekennzeichnet, daß die Materialanhäufung einteilig mit der axial nach außen gerichteten Falte (16) verbunden ist und den Spalt (19) zwischen den Schlauchabschnitten (14, 15, 18) teilweise ausfüllt.

3. Dichtungsbalg nach einem der Ansprüche 1 bis 2, dadurch gekennzeichnet, daß der Dichtungsbalg (4) einen radial außen angeordneten Schlauchabschnitt (14) mit einer größeren Wandstärke als die hineingefalteten Schlauchabschnitte (15, 18) hat.

4. Dichtungsbalg nach einem der Ansprüche 1 bis 3, dadurch gekennzeichnet, daß die axial nach außen gerichtete Falte (16) mit kleinerem Durchmesser axial zum Kugelzapfen (4) weiter außen angeordnet ist.

5. Dichtungsbalg (8) für Kugelgelenke, der die Öffnung (7) zwischen einem Gelenkgehäuse (1) und einem Winkel- bzw. drehbeweglich aus diesem herausragendem Kugelzapfen (4) verschließt, wobei der Dichtungsbalg (8) aus einem Elastomer mit einer großen Öffnung auf dem Gelenkgehäuse (1) befestigt ist und mit einer kleinen Öffnung dichtend am Kugelzapfen (4) anliegt, wobei der Dichtungsbalg (8) fortlaufend ineinandergefaltete, axial zum Kugelzapfen (4) ausgerichtete, sich in Axialrichtung des Kugelzapfens (4) zumindest teilweise überdeckende Schlauchabschnitte (14, 15, 18) hat, die untereinander durch umlaufende Falten (16, 17) verbunden sind und wobei die Schlauchabschnitte (14, 15, 18) ausgehend von dem am Gelenkgehäuse (1) befestigten, nicht eingefalteten Schlauchabschnitt (14) fortlaufend einen geringeren Durchmesser aufweisen, dadurch gekennzeichnet, daß jede axial zum Kugelzapfen (4) nach außen gerichtete Falte (16) eine einteilig verbundene Materialanhäufung aufweist, die im Vergleich zu den Schlauchabschnitten (14, 15, 18) und den axial zum Kugelzapfen (4) nach innen gerichteten Falten (17) eine Vergrößerung der Wandstärke bewirkt, daß die Materialanhäufungen ausschließlich die Spalte (19) zwischen den Schlauchabschnitten (14, 15, 18) teilweise ausfüllen, daß die axial zum Kugelzapfen (4) nach außen gerichteten Falten (16) entlang der Zapfenachse gestaffelt angeordnet sind, wobei sich die Falten (16) mit kleinerem Durchmesser axial zum Kugelzapfen (4) weiter außen befinden und daß die Materialanhäufung die Spalte (19) so ausfüllen, daß sie gemeinsam die hineingefalteten Schlauchabschnitte (15, 18) radial zum Kugelzapfen (4) vollständig abdecken und vor einer Beschädigung schützen.

6. Dichtungsbalg nach einem der Ansprüche 1 bis 5 dadurch gekennzeichnet, daß jede axial nach außen gerichtete Falte (16) außen eine Rundung (23) hat.

7. Dichtungsbalg nach einem der Ansprüche 1 bis 6, dadurch gekennzeichnet, daß die Schlauchabschnitte (14, 15, 18) in Umfangsrichtung und/oder Zapfenachsrichtung sinusförmig gewellt sind.

## Revendications

1. Soufflet d'étanchéité (8) pour articulations sphériques, qui obture l'ouverture (7) entre un carter d'articulation (1) et, faisant saillie hors de celui-ci, un pivot (4) à tête sphérique mobile angulairement et en rotation, le soufflet d'étanchéité (8) en élastomère étant fixé par une grande ouverture sur le carter d'articulation (1) et étant raccordé de manière étanche par une petite ouverture au pivot (4) à tête sphérique, cependant que ce soufflet d'étanchéité (8) possède des segments tubulaires flexibles (14, 15, 18) successivement repliés les uns dans les autres, orientés axialement par rapport au pivot (4) à tête sphérique, qui se recouvrent au moins partiellement en direction axiale et sont reliés entre eux par des replis périphériques (16, 17) et qui présentent un diamètre allant en diminuant progressivement à partir du segment tubulaire flexible (14) non replié, fixé sur le carter d'articulation (1), caractérisé en ce qu'il ne présente qu'un repli (16) dirigé axialement vers l'extérieur par rapport au pivot (4) à tête sphérique, qui est enroulé en spirale autour de l'axe du pivot et en ce que le repli (16) dirigé vers l'extérieur axialement par rapport au pivot (4) à tête sphérique présente une accumulation de matière, qui produit un accroissement de l'épaisseur de paroi, en comparaison des segments tubulaires flexibles (14, 15, 18) et du repli (17) dirigé vers l'intérieur axialement par rapport au pivot (4) à tête sphérique.

2. Soufflet d'étanchéité selon la revendication 1, caractérisé en ce que l'accumulation de matière est reliée d'une pièce au repli (16) dirigé axialement vers l'extérieur et remplit partiellement l'espace (19) entre les segments tubulaires flexibles (14, 15, 18).

3. Soufflet d'étanchéité selon l'une des revendications 1 et 2, caractérisé en ce que le soufflet d'étanchéité (4) possède un segment tubulaire flexible (14) disposé radialement vers l'extérieur, dont l'épaisseir de paroi est plus grande que celle des segments tubulaires flexibles repliés (15, 18).

4. Soufflet d'étanchéité selon l'une des revendications 1 à 3, caractérisé en ce que le repli (16) dirigé axialement vers l'extérieur de plus petit diamètre est placé plus à l'extérieur axialement par rapport au pivot (4) à tête sphérique.

5. Soufflet d'étanchéité (8) pour articulations sphériques, qui obture l'ouverture (7) entre un carter d'articulation (1) et, faisant saillie hors de celui-ci, un pivot (4) à tête sphérique mobile angulairement et en rotation, le soufflet d'étanchéité (8) en élastomère étant fixé par une grande ouverture sur le carter d'articulation (1) et raccordé de manière étanche par une petite ouverture au pivot (4) à tête sphérique et possédant des segments tubulaires flexibles (14, 15, 18) successivement repliés les uns dans les autres, orientés axialement par rapport au pivot (4) à tête sphérique, qui se recouvrent au moins partiellement en direction axiale du pivot (4) à tête sphérique, qui se recouvrent au moins partiellement en direction axiale du pivot (4) à tête sphérique et qui sont reliés entre eux par des replis périphériques (16, 17), ces segments tubulaires flexibles (14, 15, 18) présentant un diamètre allant en diminuant progressivement à partir du segment tubulaire flexible (14) non replié, fixé sur le carter d'articulation (1), caractérisé en ce que chaque repli (16) dirigé vers l'extérieur axialement par rapport au pivot (4) à tête sphérique présente une accumulation de matière d'une seule pièce, qui produit un accroissement de l'épaisseur de paroi, en comparaison avec les segments tubulaires flexibles (14, 15, 18) et les replis (17) dirigés vers l'intérieur axialement par rapport au pivot (4) à tête sphérique, en ce que les accumulations de matière remplissent exclusivement en partie l'espace (19) entre les segments tubulaires flexibles (14, 15, 18), en ce que les replis (16) dirigés vers l'extérieur axialement par rapport au pivot (4) à tête sphérique sont échelonnés le long de l'axe du pivot, les replis (16) de plus petit diamètre se trouvant axialement par rapport au pivot (4) à tête sphérique plus à l'extérieur, et en ce que les accumulations de matière remplissent l'espace (19), de telle sorte qu'elles recouvrent ensemble en totalité, radialement par rapport au pivot (4) à tête sphérique, les segments tubulaires flexibles repliés (15, 18) et les protègent d'une détérioration.

6. Soufflet d'étanchéité selon l'une des revendications 1 à 5, caractérisé en ce que chaque repli (16) dirigé axialement vers l'extérieur présente extérieurement un arrondi (23).

7. Soufflet d'étanchéité selon l'une des revendications 1 à 6, caractérisé en ce que les segments tubulaires flexibles (14, 15, 18) sont ondulés en sinusoïde dans la direction périphérique et/ou dans la direction de l'axe du pivot.

**Claims**

1. Seal bellows (8) for ball and socket joints, which seals the opening (7) between a joint housing (1) and an angularly or rotatably movable ball journal (4) protruding from the latter, the seal bellows (8), made of an elastomer, being secured with a large opening on the joint housing (1) and resting sealingly with a small opening on the ball journal (4), the seal bellows (8) having tube sections (14, 15, 18) which are folded successively into one another, aligned axially relative to the ball journal (4), at least partially overlap in the axial direction and are connected to one another by circumferential folds (16, 17), and, starting from the tube section (14) not folded in, which is secured on the joint housing (1), the tube sections (14, 15, 18) successively having a smaller diameter, characterized in that the seal bellows (8) have only one fold (16) which is directed outwards axially relative to the ball journal (4) and is wound helically about the journal axis, and in that the fold (16) directed outwards axially relative to the ball journal (4) has a material accumulation which, in comparison with the tube sections (14, 15, 18) and the fold (17) directed inwards axially relative to the ball journal (4) effects an increase in the wall thickness.

2. Seal bellows according to Claim 1, characterized in that the material accumulation is joined integrally to the fold (16) directed axially outwards and partially fills the gap (19) between the tube sections (14, 15, 18).

3. Seal bellows according to one of Claims 1 to 2, characterized in that the seal bellows (4) has a tube section (14) arranged radially at the outside, having a greater wall thickness than the folded-in tube sections (15, 18).

4. Seal bellows according to one of Claims 1 to 3, characterized in that the axially outward-directed fold (16) of smaller diameter is arranged further out axially relative to the ball journal (4).

5. Sealed bellows (8) for ball and socket joints, which seals the opening (7) between a joint housing (1) and an angularly or rotatably movable ball journal (4) protruding from the latter, the seal bellows (8), made of an elastomer, being secured with a large opening on the joint housing (1) and resting sealingly with a small opening on the ball journal (4), the seal bellows (8) having tube sections (14, 15, 18) which are folded successively into one another, aligned axially relative to the ball journal (4), at least partially overlap in the axial direction of the ball journal (4) and are connected to one another by circumferential folds (16, 17), and, starting from the tube section (14) not folded in, which is secured on the joint housing (1), the tube sections (14, 15, 18) successively having a smaller diameter, characterized in that each fold (16) directed outwards axially relative to the ball journal (4) has an integrally joined material accumulation which, in comparison with the tube sections (14, 15, 18) and the folds (17) directed inwards axially relative to the ball journal (4), effects an increase in the wall thickness, in that the material accumulations partially fill only the gaps (19) between the tube sections (14, 15, 18), in that the folds (16) directed outwards axially relative to the ball journal (4) are arranged staggered along the journal axis, the folds (16) of smaller diameter being situated further out axially relative to the ball journal (4), and in that the material accumulations fill the gaps (19) in such a way that together they completely cover the folded-in tube sections (15, 16) radially relative to the ball journal (4) and protect them from damage.

6. Seal bellows according to one of Claims 1 to 5, characterized in that, externally, each fold (16) directed axially outwards has a rounded portion (23).

7. Seal bellows according to one of Claims 1 to 6, characterized in that, in the circumferential direction and/or in the axial direction of the journal, the tube sections are corrugated sinusoidally.

Fig.1

Fig.2

Fig.3

Fig. 4

Fig. 5

Fig. 6